# EUROPÄISCHE PATENTANMELDUNG

(11) **EP 4 119 757 A1**
(43) Veröffentlichungstag der Anmeldung: **18.01.2023**
(21) Anmeldenummer: 21185319.7
(22) Anmeldetag: 13.07.2021
(51) Int. Cl.: E05F 3/22, F16B 31/00, F16B 1/00, F16D 9/00

(54) **THERMISCH LÖSBARES BEFESTIGUNGSELEMENT, INSBESONDERE ZUR BEFESTIGUNG EINES TÜRBETÄTIGERS**

(71) Anmelder: dormakaba Deutschland GmbH, 58256 Ennepetal (DE)
(72) Erfinder: Hellwig, Alexander, 58256 Ennepetal (DE)
(74) Vertreter: Balder IP Law, S.L.

(57) **Zusammenfassung**

Die Erfindung betrifft ein thermisch lösbares Befestigungselement (1), insbesondere zur Befestigung eines Türbetätigers (100), umfassend einen Grundkörper (2), der zum Einführen in eine Aussparung oder mehrere fluchtende Aussparungen ausgebildet ist, einen in den Grundkörper (2) eingesetzten Kern (7), zumindest teilweise aus einem Formgedächtnismaterial, wobei der Grundkörper (2) einen labilen Bereich (5) aufweist, der durch den Kern (7) stabilisiert ist, und wobei der Kern (7) dazu ausgebildet ist, sich bei thermischer Aktivierung des Formgedächtnismaterials zumindest teilweise aus dem labilen Bereich (5) zurückzuziehen.

## Beschreibung

Die Erfindung betrifft ein thermisch lösbares Befestigungselement, das insbesondere zur Befestigung eines Türbetätigers an einer Tür verwendet wird.

Türbetätiger werden dazu benutzt, Türen zu schließen und/oder zu öffnen. Als Türbetätiger werden insbesondere Türschließer und Türantriebe bezeichnet. Beim Türschließer wird im Regelfall durch die manuelle Öffnungsbewegung ein Federspeicher geladen. Die dabei gespeicherte Energie wird zum Schließen der Tür genutzt. Beim Türantrieb kann beispielsweise mittels Elektromechanik oder Hydraulik die Tür selbständig geöffnet und/oder geschlossen werden. Türbetätiger werden üblicherweise auf dem Türblatt oder der Zarge bzw. Wand befestigt.

Insbesondere bei Brandschutztüren ist zu beachten, dass in den Türbetätigern oftmals brennbare Fluide, insbesondere Hydrauliköle, zur Anwendung kommen. Durch geeignete Maßnahmen ist möglichst zu vermeiden, dass sich das Fluid im Brandfall zu stark erhitzt und gegebenenfalls entzündet.

Es ist Aufgabe vorliegender Erfindung ein Befestigungselement anzugeben, das sich durch thermische Einwirkung löst und dadurch beispielsweise das Abfallen eines Türbetätigers von einer Tür im Brandfall ermöglicht.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Die Erfindung beschreibt ein thermisch lösbares Element, das insbesondere zur Befestigung eines Türbetätigers verwendet wird.

Das Befestigungselement umfasst einen Grundkörper, der zum Einführen in eine Aussparung oder mehrere fluchtende Aussparungen ausgebildet ist. Insbesondere ist der Grundkörper als Schraube mit entsprechendem Außengewinde oder als Spreizdübel ausgebildet.

Zusätzlich zu dem Grundkörper weist das Befestigungselement einen in den Grundkörper eingesetzten Kern auf. Der Grundkörper erstreckt sich insbesondere entlang seiner Mittelachse, wobei im verwendeten Zustand diese Mittelachse insbesondere mit den Axialrichtungen der Aussparungen, in die das Befestigungselement eingesetzt wird, fluchtet. Insbesondere erstreckt sich auch der im Grundkörper eingesetzte Kern entlang der Mittelachse.

Der Kern ist zumindest teilweise aus einem Formgedächtnismaterial gefertigt. Besonders bevorzugt besteht der gesamte Kern aus dem Formgedächtnismaterial. Insbesondere wird der Kern teilweise oder vollständig aus einem Draht aus dem Formgedächtnismaterial gebildet. Bei dem Formgedächtnismaterial handelt es sich insbesondere um ein Formgedächtnismetall. Das Formgedächtnismaterial ist insbesondere ein spezielles Metall, das in zwei unterschiedlichen Kristallstrukturen (z.B. Austenit und Martensit) existieren kann.

Der Grundkörper weist einen labilen Bereich auf, der durch den Kern stabilisiert ist. Hierzu kann der Grundkörper einteilig ausgestaltet sein, so dass der labile Bereich integraler Bestandteil des gesamten Grundkörpers ist. Der labile Bereich ist vorzugsweise so ausgebildet, dass er ohne die Stabilisierung durch den Kern nach innen, also zur Mittelachse hin kollabiert. Zur Stabilisierung des labilen Bereichs ragt der Kern vorzugsweise in den labilen Bereich hinein.

Der Kern ist so ausgebildet und angeordnet, dass er sich bei thermischer Aktivierung des Formgedächtnismaterials zumindest teilweise aus dem labilen Bereich zurückzieht. Diese thermische Aktivierung ist gleichzusetzen mit einem Erwärmen des Formgedächtnismaterials. Das Formgedächtnismaterial (insbesondere der gesamte Kern), ist vorzugsweise so ausgebildet, dass es sich bei der thermischen Aktivierung in seiner entlang der Mittelachse definierten Länge verkürzt und sich dadurch aus dem labilen Bereich zurückzieht.

Das thermische Aktivieren erfolgt insbesondere in einem Temperaturbereich von 90°C bis 200°C.

Bevorzugt ist vorgesehen, dass der labile Bereich zumindest einen Schlitz aufweist. Der Schlitz erstreckt sich vorzugsweise parallel zur Mittelachse und/oder vorzugsweise bis zu einer Stirnseite des Grundkörpers. Insbesondere ist vorgesehen, dass der Grundkörper eine zylindrische Form aufweist. Im Inneren der zylindrischen Form ist ein hohler Kanal entlang der Mittelachse zu Aufnahme des Kerns vorgesehen. Der zumindest eine Schlitz erstreckt sich in Radialrichtung vorzugsweise von der Oberfläche des labilen Bereichs bis in den hohlen Kanal bzw. bis zum Kern.

In besonders bevorzugter Ausführung ist vorgesehen, dass der labile Bereich mehrere der Schlitze aufweist und durch die Schlitze in mehrere Segmente unterteilt ist. Durch diese mehreren Segmente ist eine leichte Kollabierung bzw. ein leichtes Einfallen des labilen Bereichs radial nach innen möglich, sobald sich der Kern aus dem labilen Bereich zumindest teilweise zurückgezogen hat.

Der labile Bereich befindet sich vorzugsweise an einem Ende des Grundkörpers. Insbesondere befindet sich am gegenüberliegenden Ende ein Kopf des Grundkörpers.

In bevorzugter Ausführung ist vorgesehen, dass sich der Kern, insbesondere das Formgedächtnismaterial, über zumindest 50%, vorzugsweise zumindest 75%, einer axialen Länge des Grundkörpers erstreckt. Dadurch ist der Kern relativ lang ausgestaltet und kann bei der thermischen Aktivierung eine entsprechend große Längenveränderung (Verkürzung) erfahren.

Wie eingangs erwähnt, ist der Grundkörper vorzugsweise als Schraube mit entsprechendem Außengewinde ausgebildet. Das Außengewinde befindet sich dabei vorzugsweise zumindest am labilen Bereich. Auch der restliche Bereich des Grundkörpers kann das Außengewinde aufweisen. Zur Verwendung des Befestigungselementes wird dieses in das zu befestigende Element (beispielsweise Türbetätiger) eingesteckt und in die zugehörige Montagefläche (beispielsweise Türblatt) eingeschraubt. In dem zu befestigenden Element kann das Befestigungselement in einer Durchgangsbohrung ohne Innengewinde stecken wohingegen die Aussparung in der Montagefläche ein Innengewinde aufweist. In diesem Zustand befindet sich der Kern im Inneren des Grundkörpers und ragt zur Stabilisierung des labilen Bereichs in den labilen Bereich hinein. Bei entsprechender thermischer Aktivierung, also bei einer Erwärmung des Kerns, zieht sich dieser aufgrund des Formgedächtnismaterials zusammen und zieht sich dadurch aus dem labilen Bereich heraus. Hierzu ist es besonders von Vorteil, wenn das dem labilen Bereich abgewandte Ende des Kerns fest mit dem Grundkörper verbunden ist. Hierzu ist der Kern beispielsweise im Bereich des Kopfes mit dem Grundkörper verschweißt oder anderweitig fest verbunden.

In einer weiteren Variante ist vorgesehen, dass der Grundkörper als Spreizdübel ausgebildet ist. Dieser Spreizdübel weist an seinem dem Kopf abgewandten Ende insbesondere mehrere durch Schlitze unterteilte Segmente auf. Diese durch Schlitze unterteilten Segmente bilden, wie bereits beschrieben, vorzugsweise den labilen Bereich. Bei der Montage des als Spreizdübel ausgebildeten Befestigungselementes, erstreckt sich der Kern zunächst noch nicht in den labilen Bereich, so dass das Befestigungselement ohne Weiteres in die zumindest eine Aussparung eingesteckt werden kann. Nach dem Einstecken wird der Kern in den Spreizdübel hineingetrieben und drückt dabei den labilen Bereich radial nach außen, so dass sich dieser Bereich innerhalb der Aussparung verkeilt. Kommt es zur thermischen Aktivierung, so zieht sich der Kern wieder aus dem labilen Bereich zurück, so dass der labile Bereich radial nach innen kollabieren kann.

Bei der Ausbildung als Spreizdübel ist bevorzugt vorgesehen, dass der Kern dazu ausgebildet ist, an dem dem labilen Bereich abgewandten Ende des Grundkörpers fest mit dem Grundkörper verbunden zu werden. Insbesondere ist hierzu vorgesehen, dass in diesem Bereich des Grundkörpers eine Presspassung zwischen Kern und Grundkörper ausgebildet ist, so dass nach vollständigem Eintreiben des Kerns (Spreizdorns) der Kern kraftschlüssig mit dem Grundkörper verbunden wird. Allerdings kann auch auf andere Weise, beispielsweise durch Deformation des Kerns beim Eintreiben eine Kraft und/oder formschlüssige Verbindung zwischen Kern und Grundkörper erreicht werden.

Bei der Ausgestaltung des Grundkörpers als Spreizdorn ist bevorzugt vorgesehen, dass der labile Bereich an seinem stirnseitigen Ende zumindest eine Formschlussnase aufweist. Insbesondere befinden sich diese Formschlussnasen an den stirnseitigen Enden der beschriebenen Segmente. Diese Formschlussnasen können bei Verwendung des Befestigungselementes zur formschlüssigen Verbindung mit der Montagefläche oder dem zu befestigenden Element verwendet werden.

Die Erfindung umfasst ferner eine Türbetätigeranordnung. Diese Türbetätigeranordnung wiederum umfasst einen Türbetätiger und zumindest eines der beschriebenen Befestigungselemente, das zur Befestigung des Türbetätigers ausgebildet ist. Dabei ist auch vorgesehen, dass Türbetätiger an Montageplatten befestigt werden können, wobei die Montageplatte wiederum an der Tür, insbesondere dem Türblatt, befestigt wird. Die hier beschriebenen Befestigungselemente können sowohl zur Befestigung der Montageplatte an der Tür als auch zur Befestigung des Türbetätigers an der Montageplatte verwendet werden.

Ferner umfasst die Erfindung eine Türanordnung. Die Türanordnung umfasst eine Tür und die beschriebene Türbetätigeranordnung, also die Kombination aus Türbetätiger und Befestigungselement. Der Türbetätiger ist dabei mittels des zumindest einen Befestigungselements an der Tür, insbesondere dem Türblatt, befestigt. Dies beschreibt sowohl die Variante mit als auch ohne Montageplatte und somit die Verwendung des Befestigungselements zum Befestigen der Montageplatte an der Tür als auch die Verwendung des Befestigungselements zur Befestigung des Türbetätigers an der Montageplatte.

Die im Rahmen des erfindungsgemäßen Befestigungselements beschriebenen Ausgestaltungen und zugehörigen Unteransprüche finden entsprechend vorteilhafte Anwendung für die erfindungsgemäße Türbetätigeranordnung und die erfindungsgemäße Türanordnung.

Die Erfindung wird nun anhand zweier Ausführungsbeispiele näher beschrieben. Dabei zeigen:
- Fig. 1: eine erfindungsgemäße Türanordnung mit erfindungsgemäßer Türbetätigeranordnung und erfindungsgemäßen Befestigungselementen gemäß allen Ausführungsbeispielen.
- Fig. 2 und 3: das erfindungsgemäße Befestigungselement vor einer thermischen Aktivierung gemäß einem ersten Ausführungsbeispiel,
- Fig. 4 und 5: das erfindungsgemäße Befestigungselement nach einer thermischen Aktivierung gemäß dem ersten Ausführungsbeispiel,
- Fig. 6: das erfindungsgemäße Befestigungselement in verschiedenen Zuständen gemäß einem zweiten Ausführungsbeispiel, und
- Fig. 7: das in Fig. 6 gekennzeichnete Detail VII.

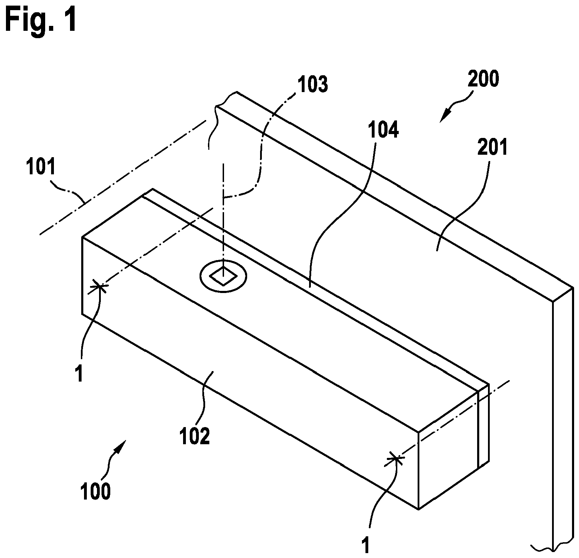

Fig. 1 zeigt für alle Ausführungsbeispiele eine Türanordnung 200. Die Türanordnung 200 umfasst eine Tür 201, von der das Türblatt schematisch dargestellt ist. Diese Tür 201 bildet eine Montagefläche mit zugehöriger Montageachse 101. Ferner zeigt Fig. 1 eine Türbetätigeranordnung 100. Die Türbetätigeranordnung 100 umfasst einen Türbetätiger 102, eine optionale Montageplatte 104 und Befestigungselemente 1.

Der Türbetätiger 102 weist eine rein schematisch dargestellte Abtriebsachse 103 auf. Über diese Abtriebsachse 103 und ein zugehöriges Gestänge wird der Türbetätiger 102 in üblicher Weise mit der Zarge bzw. Wand verbunden. Das Gestänge kann dabei als Scherengestänge oder Gleitschienengestänge ausgebildet sein.

Fig. 1 zeigt rein schematisch mehrere Befestigungselemente 1, die sich parallel zur Montageachse 101 erstrecken und dazu verwendet werden, den Türbetätiger 102 an der Tür 201 zu befestigen. Dabei ist vorgesehen, dass die Befestigungselemente 1 entweder dazu verwendet werden, um den Türbetätiger 102 an seiner Montageplatte 104 zu befestigen und/oder um die Montageplatte 104 an der Tür 201 zu befestigen.

In den nun vorgestellten Ausführungsbeispielen werden für gleiche bzw. funktional gleiche Bauteile stets dieselben Bezugszeichen verwendet.

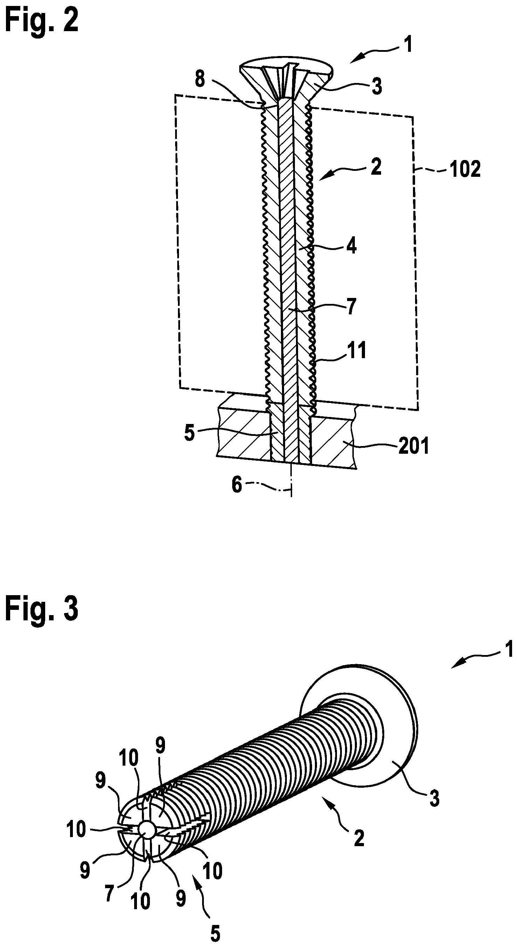

Fig. 2 zeigt eine Schnittansicht des Befestigungselements 1 gemäß dem ersten Ausführungsbeispiel. Eine zugehörige perspektivische Ansicht zeigt Fig. 3. Zur Orientierung sind in Fig. 2 rein schematisch der Türbetätiger 102 und die Tür 201 eingezeichnet.

Das Befestigungselement 1 umfasst einen Grundkörper 2 und einen Kern 7. Der Grundkörper 2 erstreckt sich von einem Kopf 3 über einen Mittelbereich 4 bis zu einem labilen Bereich 5 entlang seiner Mittelachse 6.

Am Mittelbereich 4 und am labilen Bereich 5 weist der Grundkörper 2 ein Außengewinde 11 auf und ist somit als Schraube ausgebildet.

Der labile Bereich 5 ist durch vier Schlitze 10 in vier Segmente 9 unterteilt. Jeder Schlitz 10 erstreckt sich dabei parallel zur Mittelachse 6 bis zum stirnseitigen Ende des labilen Bereichs 5. Des Weiteren erstreckt sich der Schlitz 10 in radialer Richtung von der Mantelfläche des labilen Bereichs 5 bis zum Kern 7.

Der Kern 7 erstreckt sich im Wesentlichen über die gesamte Länge des Grundkörpers 2, im Inneren des Grundkörpers 2 koaxial zur Mittelachse 6. Dabei ragt der Kern 7 in den labilen Bereich 5 und stabilisiert dadurch den labilen Bereich 5, so dass die Segmente 9 nicht radial nach innen einfallen können.

Im Bereich des Kopfes 3 ist der Kern 7 an einem Befestigungsbereich 8 fest mit dem Grundkörper 2 verbunden, insbesondere verschweißt.

Im gezeigten Ausführungsbeispiel ist der Kern 7 vollständig aus einem Formgedächtnismaterial, insbesondere einem metallischen Draht, gebildet.

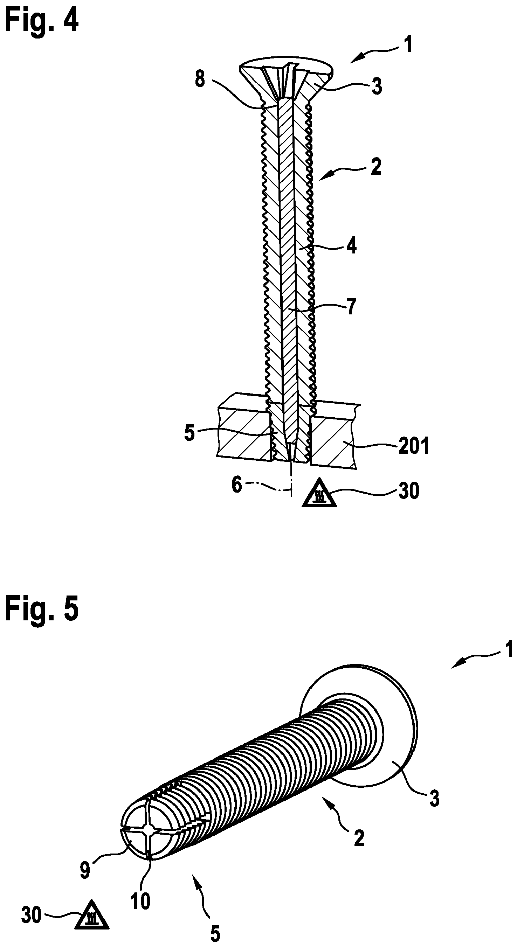

Fig. 4 und 5 verdeutlichen schematisch eine thermische Aktivierung 30. Durch diese thermische Aktivierung 30 verkürzt der Kern 7 seine Länge und zieht sich dadurch aus dem labilen Bereich 5 zurück. Der labile Bereich 5 kann nach innen einfallen. Dadurch löst sich im labilen Bereich 5 das Außengewinde 11 aus dem zugehörigen Innengewinde in der Tür 201, wodurch der Türbetätiger 102 von der Tür 201 abfallen kann. Dadurch wird eine zu starke Erwärmung des Türbetätigers 102 und insbesondere des Hydraulikfluides im Türbetätiger 102 vermieden. Es ist selbstverständlich zu verstehen, dass sich der Türbetätiger 102 auf einer brandabgewandten Seite der Türe 201 befindet und die thermische Aktivierung 30 ihre Ursache in einem Brand auf der gegenüberliegenden Seite der Tür 201 hat.

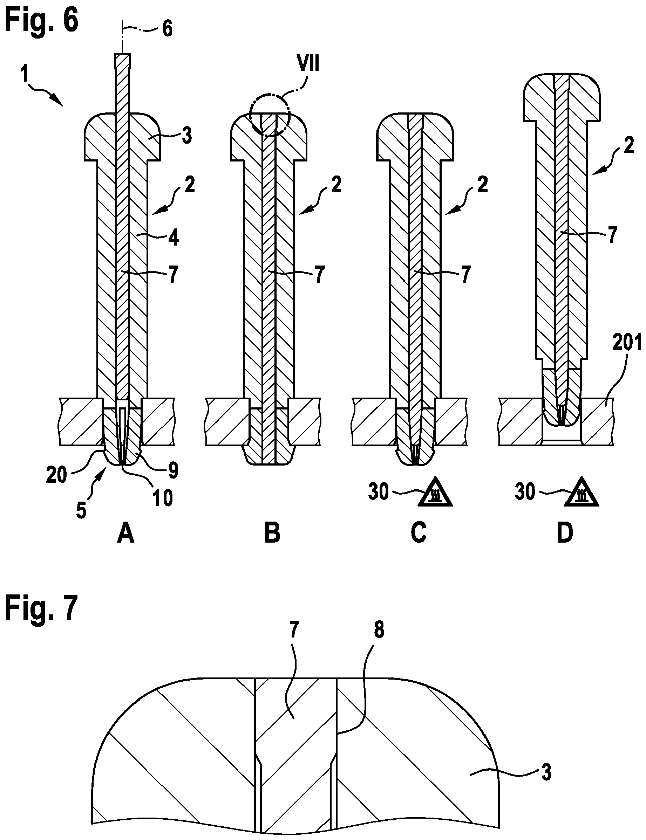

Fig. 6 und 7 zeigen das Befestigungselement 1 gemäß einem zweiten Ausführungsbeispiel, in dem der Grundkörper 1 als Spreizdübel und der Kern 7 als Spreizdorn ausgebildet sind. Der Kern 7 ist hier wiederum vollständig aus dem Formgedächtnismaterial gefertigt.

Fig. 6 zeigt in der Schnittansicht vier verschiedene Zustände A, B, C, D des Befestigungselements 1. Im Zustand A ist der Kern 7 noch nicht vollständig in den Grundkörper 2 eingetrieben, wodurch der labile Bereich 5 radial nach Innen kollabieren kann. Auch hier sind wieder mehrere Segmente 9 vorgesehen, die den zu spreizenden Anteil des Spreizdübels bilden. Optionale Formschlussnasen 20 können hierbei zu einer formschlüssigen Verbindung mit der Tür 201 genutzt werden.

Nach Einstecken des Befestigungselements 1 gemäß Zustand A wird gemäß Zustand B der Kern 7 in den Grundkörper 2 eingetrieben und erstreckt sich dadurch auch in den labilen Bereich 5, wodurch der labile Bereich 5 stabilisiert wird. Hierdurch kommt es zu einem Klemmen des labilen Bereichs 5 in der Tür 201 und gleichzeitig zu einer formschlüssigen Verbindung mittels der Formschlussnasen 20.

Zustand C zeigt die thermische Aktivierung 30, bei der sich der Kern 7 wieder aus dem labilen Bereich 5 zurückzieht, wodurch der labile Bereich 5 einfallen kann und sich dadurch das Befestigungselement 7 leicht aus der Tür 201 löst. Dies führt wiederum zu einem Abfallen des Türbetätigers 102 von der Tür 201.

Fig. 7 zeigt das in Fig. 6 gekennzeichnete Detail Vll. Anhand dieser Detaildarstellung ist zu erkennen, dass im Bereich des Kopfes 3 des Grundkörpers 2 im Befestigungsbereich 8 eine Presspassung zwischen Kern 7 und Grundkörper 2 ausgebildet ist. Sobald der Kern 7 bis in diesen Befestigungsbereich 8 eingetrieben ist, erzeugt sich eine kraftschlüssige Verbindung zwischen Grundkörper 2 und Kern 7 im Befestigungsbereich 8, so dass hier der Kern 7 fest mit dem Grundkörper 2 verbunden ist.

Es ist zu verstehen, dass das Befestigungselement 1 gemäß beiden Ausführungsbeispielen auch in anderen Anwendungsfällen, insbesondere wenn ein zu befestigendes Element im Brandfall von seiner Montagefläche zu lösen ist, angewendet werden kann.

### Bezugszeichenliste

- 1: Befestigungselement
- 2: Grundkörper
- 3: Kopf
- 4: Mittelbereich
- 5: labiler Bereich
- 6: Mittelachse
- 7: Kern
- 8: Befestigungsbereich
- 9: Segmente
- 10: Schlitze
- 11: Außengewinde
- 20: Formschlussnasen
- 30: thermische Aktivierung
- 100: Türbetätigeranordnung
- 101: Montageachse
- 102: Türbetätiger
- 103: Abtriebsachse
- 104: Montageplatte
- 200: Türanordnung
- 201: Tür

## Patentansprüche

1. Thermisch lösbares Befestigungselement (1), insbesondere zur Befestigung eines Türbetätigers (100), umfassend
• einen Grundkörper (2), der zum Einführen in eine Aussparung oder mehrere fluchtende Aussparungen ausgebildet ist,
• einen in den Grundkörper (2) eingesetzten Kern (7), zumindest teilweise aus einem Formgedächtnismaterial,
• wobei der Grundkörper (2) einen labilen Bereich (5) aufweist, der durch den Kern (7) stabilisiert ist,
• und wobei der Kern (7) dazu ausgebildet ist, sich bei thermischer Aktivierung des Formgedächtnismaterials zumindest teilweise aus dem labilen Bereich (5) zurückzuziehen.

2. Befestigungselement nach Anspruch 1, wobei der labile Bereich (5) zumindest einen Schlitz (10) aufweist.

3. Befestigungselement nach Anspruch 2, wobei der labile Bereich (5) durch mehrere Schlitze (10) in mehrere Segmente (9) unterteilt ist.

4. Befestigungselement nach einem der vorhergehenden Ansprüche, wobei der labile Bereich (5) an einem Ende des Grundkörpers (2) ausgebildet ist.

5. Befestigungselement nach einem der vorhergehenden Ansprüche, wobei sich der Kern (7), insbesondere das Formgedächtnismaterial, über zumindest 50%, vorzugsweise zumindest 75%, einer axialen Länge des Grundkörpers (2) erstreckt.

6. Befestigungselement nach einem der vorhergehenden Ansprüche, wobei der Kern (7) an einem dem labilen Bereich (5) abgewandten Ende fest mit dem Grundkörper (2) verbunden oder zur festen Verbindung mit dem Grundkörper (2) ausgebildet ist.

7. Befestigungselement nach einem der vorhergehenden Ansprüche, wobei der Grundkörper (2) als Schraube mit Außengewinde (11) zumindest am labilen Bereich (5) ausgebildet ist.

8. Befestigungselement nach einem der Ansprüche 1 bis 6, wobei der Grundkörper (2) als Spreizdübel und der Kern (7) als Spreizdorn ausgebildet sind.

9. Türbetätigeranordnung (100) umfassend einen Türbetätiger (102) und zumindest ein Befestigungselement (1) nach einem der vorhergehenden Ansprüche zum Befestigen des Türbetätigers (102).

10. Türanordnung (200), umfassend eine Tür (201) und eine Türbetätigeranordnung (100) nach Anspruch 9, wobei der Türbetätiger (102) mittels des zumindest einen Befestigungselementes (1) an der Tür (201) befestigt ist.
